(19) **Europäisches Patentamt / European Patent Office / Office européen des brevets**

(11) **EP 1 537 647 B1**

(12) **EUROPEAN PATENT SPECIFICATION**

(45) Date of publication and mention
of the grant of the patent:
**05.07.2017 Bulletin 2017/27**

(51) Int Cl.:
*H02M 7/493* (2007.01)    *H02H 5/04* (2006.01)
*H02M 1/32* (2007.01)    *H02H 7/12* (2006.01)

(21) Application number: **04734850.3**

(86) International application number:
**PCT/FI2004/000321**

(22) Date of filing: **26.05.2004**

(87) International publication number:
**WO 2004/107550 (09.12.2004 Gazette 2004/50)**

(54) **TEMPERATURE MONITORING OF PARALLEL-CONNECTED INVERTER MODULES**

TEMPERATURÜBERWACHUNG PARALLELGESCHALTETER WECHSELRICHTERMODULE

SURVEILLANCE DE LA TEMPERATURE DE MODULES ONDULEURS MONTES EN PARALLELE

(84) Designated Contracting States:
**AT BE BG CH CY CZ DE DK EE ES FI FR GB GR HU IE IT LI LU MC NL PL PT RO SE SI SK TR**

(30) Priority: **28.05.2003 FI 20030809**

(43) Date of publication of application:
**08.06.2005 Bulletin 2005/23**

(73) Proprietor: **ABB Technology Oy
00380 Helsinki (FI)**

(72) Inventors:
• **PÖYHÖNEN, Simo
FI-01370 Vantaa (FI)**
• **PASURI, Osmo
FI-03250 Ojakkala (FI)**

(74) Representative: **Kolster Oy Ab
Salmisaarenaukio 1
00180 Helsinki (FI)**

(56) References cited:
**EP-A2- 0 444 826    US-A- 5 493 154**

• **PATENT ABSTRACTS OF JAPAN vol. 1995, no. 10 30 November 1995 & JP 07 194 094 A (TOYOTA MOTOR CORP) 28 July 1995**
• **PATENT ABSTRACTS OF JAPAN vol. 1999, no. 05 31 May 1999 & JP 11 055 934 A (TOYOTA AUTOM LOOM WORKS LTD) 26 February 1999**
• **PATENT ABSTRACTS OF JAPAN vol. 1995, no. 09 31 October 1995 & JP 07 154 976 A (FUJI ELECTRIC CO LTD) 16 June 1995**

**Description**

BACKGROUND OF THE INVENTION

The invention relates to a method in connection with parallel-connected inverter modules, disclosed in the preamble of claim 1, and to an arrangement in connection with parallel-connected inverter modules, disclosed in the preamble of claim 5.

Inverters are used in frequency converters to generate a desired voltage or current to a load to be fed. A frequency converter typically receives its supply voltage from an AC network. This voltage is rectified in a rectifier unit and further converted to alternating voltage in the inverter to control the load in a desired manner. A conventional device fed from a frequency converter is a motor, which may be controlled in a reliable manner with the frequency converter using various control and adjustment principles.

As the power demand of motors increases, it is not necessarily reasonable to increase the size and capacity of individual frequency converters correspondingly. It is therefore known to connect frequency converter inverter modules in parallel to obtain the required output power.

Parallel-connection of inverter modules is typically achieved by connecting the same output phase of each parallel-connected module to a common phase supply. In other words, the output phases of each inverter module are connected to the corresponding output phases of other inverter modules. The switching instructions of the frequency converter are generated in a unit common to all the inverter modules, which unit then copies the instructions and sends them to each parallel-connected inverter module. Depending on the power needed, the number of parallel-connected modules may be anything from two upwards.

Inverter modules to be connected in parallel are typically fairly large and therefore placed in separate cabins. These cabins are cooled by blowing air into them to ensure proper operation and performance of the inverters. Today the temperatures of inverter output phases are measured for example directly from a power component of the output phase, or from the immediate vicinity thereof. The measured temperature is compared with a fixed temperature limit and thus, if the temperature rises above the limit, an overload possibly caused to the component is detected.

Prior art component temperature control thus relies on a single temperature measurement, but with this measurement only an overload of the component in question can be concluded with certainty. Other elements having an essential impact on the temperature of the switching component are properly functioning cooling and control of the switch component. Comparing the measured temperature with the fixed temperature limit does not, however, produce clear indication or diagnostic data of such disturbances that may occur.

Document US 5493154 describes a temperature share scheme. In this scheme temperatures of parallel power modules are determined and based on the temperatures the output powers of the modules are changed in order to balance the temperatures.

Document EP 0444826 A2 discloses an inverter, in which over-current protection is implemented with temperature sensors.

BRIEF DESCRIPTION OF THE INVENTION

It is an object of the present invention to provide a method and an arrangement that allow the above drawbacks to be avoided and enable a more extensive fault diagnosis than before to be implemented by means of temperature measurements. This is achieved by a method of the invention characterized by what is stated in the characterizing part of independent claim 1 and by an arrangement of the invention characterized by what is stated in the characterizing part of independent claim 5. The preferred embodiments of the invention are disclosed in the dependent claims.

The invention is based on the idea that temperature control of parallel inverter modules is carried out by comparing the temperatures of the same output phases of parallel modules with one another.

The method of the invention provides distinct advantages in fault diagnostics, because in addition to failure indications based, up to present, almost solely on an overload current, failures associated with cooling and with the operation of the control of the power component are now indicated. The failures relating cooling that the invention is capable of detecting include decreased circulation of cooling air, soiling of the cooling components in power semiconductors, and partial or complete breakdown of the cooling fan. In addition, the method enables to detect failures in control electronics, i.e. when one semiconductor component is controlled differently than others, and in power semiconductors, i.e. when a power semiconductor is not conducting or does so in an obscure manner.

The arrangement of the invention provides a simple means for attaining the advantages of the invention.

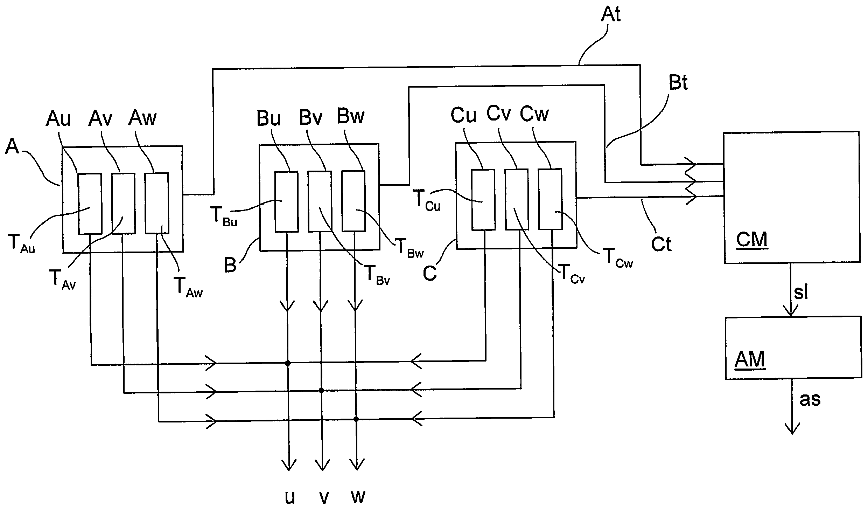

BRIEF DESCRIPTION OF THE FIGURE

In the following, the invention will be described in greater detail and with reference to the accompanying Figure, which is a schematic illustration of the connecting of parallel-connected inverter modules.

DETAILED DESCRIPTION OF THE INVENTION

The Figure is a schematic example of parallel-connected three-phase inverter modules A, B, C. Although the Figure shows three inverter modules, their number is not restricted thereto, but a required number of parallel modules may be used. Likewise, the number of phases may vary depending on the purpose of use.

Output phases Au, Av, Aw, Bu, Bv, Bw, Cu, Cv, Cw of inverter modules A, B, C are interconnected to produce output u, v, w for the load. The connection has been implemented by connecting the same phases Au, Bu, Cu; Av, Bv, Cv; Aw, Bw, Cw of each module A, B, C together.

In accordance with the method of the invention, temperature $T_{Au}$, $T_{Av}$, $T_{Aw}$, $T_{Bu}$, $T_{Bv}$, $T_{Bw}$, $T_{Cu}$, $T_{Cv}$, $T_{Cw}$ of each output phase of each inverter module is determined. This may be carried out in a conventional manner by direct temperature measurement. Many currently used power semiconductors have a built-in temperature measurement element that allows the temperature to be obtained directly from the semiconductor of the component or from the vicinity thereof. It is also possible to measure temperature from a cooling plate. In addition, it is possible to determine the temperature of components indirectly by calculating it on the basis of the current passing through the component.

In accordance with the invention the temperatures of the output phases of each inverter module are compared with the temperatures of the same output phases of the other modules connected in parallel. With reference to phase u, for example, temperature $T_{Au}$ of phase u of module A is thus compared with temperatures $T_{Bu}$, $T_{Cu}$ of phase u of modules B, C. This is implemented as a cross-comparison between all the modules and, in accordance with the invention, carried out in comparison means CM. As shown in the Figure, each inverter module is connected with the comparison means by a signal connection At, Bt, Ct, respectively.

If the comparisons show that the output phase temperature of an inverter module differs from the temperatures of the same phase in other modules by more than allowed by a predetermined limit, an alarm signal as is generated. In the arrangement of the invention this alarm signal is generated by alarm signal means AM. It is apparent that means CM and AM may be implemented in a single circuitry, although in the Figure these means are separated by a signal line sl.

Since all the substantially identical parallel inverter modules are controlled by substantially identical controls, the mutually corresponding phases of all modules are subject to substantially equal loads. Moreover, since the inverter modules correspond to each other structurally, ventilation operates in substantially the same way in connection with each module. According to the invention, the temperatures of the same phases are to be compared with each other, whereby decreased ventilation, for example, can be detected with the method of the invention.

The above-described cross-comparison of all temperatures of the same phase is fairly laborious if there is a significant number of parallel-connected modules, because a comparison between the temperatures of the phases of two modules alone does not necessarily provide a reliable result regarding a possible occurrence of failure or symptoms thereof. According to a preferred embodiment of the invention, an average of the temperatures of mutually corresponding output phases of parallel inverter modules is calculated, i.e. according to the example of the Figure, temperatures $T_{Au}$, $T_{Bu}$, $T_{Cu}$ determined for phase u are used for calculating average $T_{u\_ave}$ from the equation:

$$T_{u\_ave} = \frac{T_{Au} + T_{Bu} + T_{Cu}}{3}.$$

When the average has been calculated, which according to the arrangement of the invention is carried out by means CM, each phase temperature is compared, in accordance with the embodiment, with the average obtained and if the output phase temperature of one of the inverter modules differs from the average of corresponding output phase temperatures more than allowed by a predetermined limit, an alarm signal is generated. In an embodiment of the arrangement the comparison is carried out by means CM configured for this purpose.

In this embodiment all phase temperatures are further compared with the calculated average of the phase temperatures. However, the method can be further simplified in accordance with the embodiment by selecting the highest temperature among the temperatures of parallel modules in each phase and by comparing this maximum value with the calculated average. Expressed mathematically, maximum temperature $T_{u\_max}$ of phase u is in this embodiment selected using equation

$$T_{u\_max} = \max(T_{Au}, T_{Bu}, T_{Cu}),$$

and it is compared with the average using equation

$$\frac{T_{u\_max}}{T_{u\_ave}} > T_{limit},$$

where

$T_{limit}$ is a predetermined ratio.

If the result of the comparison carried out in means CM is greater than the ratio $T_{limit}$, the alarm signal of the invention is generated by the means for generating an alarm signal in response to a signal of the means CM in signal line sl. The alarm signal as may contain all possible known preventive precautions that aim at reducing the risk of any major failures in the equipment. Such precautions may include an alarm raised to the operator, interruption of the control of the inverter module in question, and possibly a controlled shutdown of the system as a whole.

The invention is described above, by way of example, with reference to a three-phase system having three parallel-connected inverter modules. However, it is evident that the number of both the modules and the switches may be varied according to need and implementation, the method and system of the invention still being applicable.

A person skilled in the art will find it apparent that the basic idea of the invention can be implemented in various ways. The invention and its embodiments are therefore not restricted to the above examples but they may vary within the scope of the claims.

## Claims

1. A method in connection with parallel-connected inverter modules, whereby two or more inverter modules (A, B, C) are connected in parallel to feed the same load, each inverter module (A, B, C) comprising two or more output phases (u, v, w) for supplying electric power into a two or more phase load, the method comprising:

    determining the temperature ($T_{Au}$, $T_{Av}$, $T_{Aw}$, $T_{Bu}$, $T_{Bv}$, $T_{Bw}$, $T_{Cu}$, $T_{Cv}$, $T_{Cw}$) of each output phase (Au, Av, Aw, Bu, Bv, Bw, Cu, Cv, Cw) in each inverter module (A, B, C), **characterized in that** the method further comprises the steps of:
    comparing the temperature of each output phase in each inverter module with the temperatures of the same output phase in the other parallel-connected modules, and
    generating an alarm signal if the temperature of the output phase in an inverter module differs from the temperatures of the same output phase of the other inverter modules more than allowed by a predetermined limit.

2. A method according to claim 1, **characterized in that** the comparison of temperatures comprises the steps of:

    calculating an average ($T_{u\_ave}$, $T_{v\_ave}$, $T_{w\_ave}$) of the temperatures ($T_{Au}$, $T_{Bu}$, $T_{Cu}$; $T_{Av}$, $T_{Bv}$, $T_{Cv}$; $T_{Aw}$, $T_{Bw}$, $T_{Cw}$) of mutually corresponding output phases of parallel inverter modules (A, B, C), comparing the temperature of each output phase of each parallel inverter module with the average temperature of a corresponding output phase; and
    generating an alarm signal if the temperature of the output phase of an inverter module differs from the average temperature of the corresponding phase more than allowed by a predetermined limit.

3. A method according to claim 2, **characterized in that** the comparison comprises the steps of selecting the maximum value ($T_{u\_max}$, $T_{v\_max}$, $T_{w\_max}$) of the temperatures of each output phase in each parallel inverter module, and comparing this value with the average temperature ($T_{u\_ave}$, $T_{v\_ave}$, $T_{w\_ave}$) of the corresponding output phase.

4. A method according to claim 1, 2, or 3, **characterized in that** the method also comprises a step of stopping, in response to an alarm signal, at least an inverter module (A, B, C) having a deviating temperature at the output phase.

5. An arrangement in connection with parallel-connected inverter modules, wherein two or more inverter modules (A, B, C) are connected in parallel to feed the same load, each inverter module comprising two or more output phases (u, v, w) for feeding electric power to a load of two or more phases, the arrangement comprising:

    temperature determining means for determining the temperature of each output phase ($T_{Au}$, $T_{Av}$, $T_{Aw}$, $T_{Bu}$, $T_{Bv}$, $T_{Bw}$, $T_{Cu}$, $T_{Cv}$, $T_{Cw}$) of each inverter module, **characterized in that** the arrangement further comprises
    comparison means (CM) for comparing the temperature of each output phase of each inverter module with the temperatures of the corresponding output phases of other modules connected in parallel, and
    means (AM) for generating an alarm signal (as) if the output phase temperature of one of the inverter modules differs from the temperatures of the corresponding output phase of the other inverter modules more than allowed by a predetermined limit.

6. An arrangement according to claim 5, **characterized in that** the arrangement further comprises means (CM) for calculating an average of temperatures of the mutually corresponding parallel inverter modules, the comparison means being configured to compare the temperature of each output phase of each parallel inverter module with the temperature average of a corresponding output phase.

## Patentansprüche

1. Verfahren in Verbindung mit parallelgeschalteten Wechselrichtermodulen, wobei zwei oder mehr Wechselrichtermodule (A, B, C) parallelgeschaltet sind, um dieselbe Last zu speisen, wobei jedes Wechselrichtermodul (A, B, C) zwei oder mehr Ausgangsphasen (u, v, w) zum Einspeisen elektrischer Leistung in eine zwei- oder mehrphasige Last umfasst, wobei das Verfahren umfasst:

Bestimmen der Temperatur ($T_{Au}$, $T_{Av}$, $T_{Aw}$, $T_{Bu}$, $T_{Bv}$, $T_{Bw}$, $T_{Cu}$, $T_{Cv}$, $T_{Cw}$) jeder Ausgangsphase (Au, Av, Aw, Bu, Bv, Bw, Cu, Cv, Cw) in jedem Wechselrichtermodul (A, B, C), **dadurch gekennzeichnet, dass** das Verfahren ferner die folgenden Schritte umfasst:

Vergleichen der Temperatur jeder Ausgangsphase in jedem Wechselrichtermodul mit den Temperaturen derselben Ausgangsphase in den anderen parallelgeschalteten Modulen, und

Erzeugen eines Alarmsignals, falls sich die Temperatur der Ausgangsphase in einem Wechselrichtermodul von den Temperaturen derselben Ausgangsphase der anderen Wechselrichtermodule mehr unterscheidet, als ein vorbestimmter Grenzwert erlaubt.

2. Verfahren nach Anspruch 1, **dadurch gekennzeichnet, dass** der Vergleich von Temperaturen die folgenden Schritte umfasst:

Berechnen eines Mittelwertes ($T_{u\_ave}$, $T_{v\_ave}$, $T_{w\_ave}$) der Temperaturen ($T_{Au}$, $T_{Bu}$, $T_{Cu}$; $T_{Av}$, $T_{Bv}$, $T_{Cv}$; $T_{Aw}$, $T_{Bw}$, $T_{Cw}$) einander entsprechender Ausgangsphasen paralleler Wechselrichtermodule (A, B, C),

Vergleichen der Temperatur jeder Ausgangsphase jedes parallelen Wechselrichtermoduls mit der mittleren Temperatur einer entsprechenden Ausgangsphase; und

Erzeugen eines Alarmsignals, falls sich die Temperatur der Ausgangsphase eines Wechselrichtermoduls von der mittleren Temperatur der entsprechenden Phase mehr unterscheidet, als ein vorbestimmter Grenzwert erlaubt.

3. Verfahren nach Anspruch 2, **dadurch gekennzeichnet, dass** der Vergleich die Schritte des Auswählens des maximalen Wertes ($T_{u\_max}$, $T_{v\_max}$, $T_{w\_max}$) der Temperaturen jeder Ausgangsphase in jedem parallelen Wechselrichtermodul und des Vergleichens dieses Wertes mit der mittleren Temperatur ($T_{u\_ave}$, $T_{v\_ave}$, $T_{w\_ave}$) der entsprechenden Ausgangsphase umfasst.

4. Verfahren nach Anspruch 1, 2 oder 3, **dadurch gekennzeichnet, dass** das Verfahren außerdem einen Schritt des Stoppens, in Reaktion auf ein Alarmsignal, wenigstens eines Wechselrichtermoduls (A, B, C) umfasst, das eine abweichende Temperatur an der Ausgangsphase aufweist.

5. Anordnung in Verbindung mit parallelgeschalteten Wechselrichtermodulen, wobei zwei oder mehr Wechselrichtermodule (A, B, C) parallelgeschaltet sind, um dieselbe Last zu speisen, wobei jedes Wechselrichtermodul zwei oder mehr Ausgangsphasen (u, v, w) zum Zuführen elektrischer Leistung zu einer zwei- oder mehrphasigen Last umfasst, wobei die Anordnung umfasst:

Temperaturbestimmungsmittel zum Bestimmen der Temperatur jeder Ausgangsphase ($T_{Au}$, $T_{Av}$, $T_{Aw}$, $T_{Bu}$, $T_{Bv}$, $T_{Bw}$, $T_{Cu}$, $T_{Cv}$, $T_{Cw}$) jedes Wechselrichtermoduls, **dadurch gekennzeichnet, dass** die Anordnung ferner umfasst:

Vergleichsmittel (CM) zum Vergleichen der Temperatur jeder Ausgangsphase jedes Wechselrichtermoduls mit den Temperaturen der entsprechenden Ausgangsphasen anderer Module, die parallelgeschaltet sind, und

Mittel (AM) zum Erzeugen eines Alarmsignals (as), falls sich die Ausgangsphasentemperatur eines der Wechselrichtermodule von den Temperaturen der entsprechenden Ausgangsphase der anderen Wechselrichtermodule mehr unterscheidet, als ein vorbestimmter Grenzwert erlaubt.

6. Anordnung nach Anspruch 5, **dadurch gekennzeichnet, dass** die Anordnung ferner umfasst:

Mittel (CM) zum Berechnen eines Mittelwertes von Temperaturen der einander entsprechenden parallelen Wechselrichtermodule, wobei die Vergleichsmittel dafür ausgelegt sind, die Temperatur jeder Ausgangsphase jedes parallelen Wechselrichtermoduls mit dem Temperaturmittelwert einer entsprechenden Ausgangsphase zu vergleichen.

**Revendications**

1. Procédé en relation avec des modules d'onduleur connectés en parallèle, par lequel deux ou plusieurs modules d'onduleur (A, B, C) sont connectés en parallèle pour alimenter la même charge, chaque module d'onduleur (A, B, C) comprenant deux ou plusieurs phases de sortie (u, v, w) pour fournir la puissance électrique à une charge biphasée ou d'un nombre de phases plus élevé, le procédé comprenant :

la détermination de la température ($T_{Au}$, $T_{Av}$, $T_{Aw}$, $T_{Bu}$, $T_{Bv}$, $T_{Bw}$, $T_{Cu}$, $T_{Cv}$, Tcw) de chaque phase de sortie (Au, Av, Aw, Bu, Bv, Bw, Cu, Cv, Cw) dans chaque module d'onduleur (A, B, C), **caractérisé en ce que** le procédé comprend en outre les étapes de :

comparaison de la température de chaque phase de sortie dans chaque module d'onduleur avec les températures de la même phase de sortie dans les autres modules connectés en parallèle, et

génération d'un signal d'alarme si la température de la phase de sortie dans un module d'onduleur diffère des températures de la même phase de sortie des autres modules d'onduleur d'une valeur supérieure à celle autorisée par une limite prédéterminée.

2. Procédé selon la revendication 1, **caractérisé en ce que** la comparaison des températures comprend les étapes de :

calcul d'une moyenne ($T_{u\_ave}$, $T_{v\_ave}$, $T_{w\_ave}$) des températures ($T_{Au}$, $T_{Bu}$, $T_{Cu}$, $T_{Av}$, $T_{Bv}$, $T_{Cv}$, $T_{Aw}$, $T_{Bw}$, $T_{Cw}$) des phases de sortie mutuellement correspondantes des modules d'onduleur (A, B, C) en parallèle,

comparaison de la température de chaque phase de sortie de chaque module d'onduleur en parallèle avec la température moyenne d'une phase de sortie correspondante ; et

génération d'un signal d'alarme si la température de la phase de sortie d'un module d'onduleur diffère de la température moyenne de la phase correspondante d'une valeur supérieure à celle autorisée par une limite prédéterminée.

3. Procédé selon la revendication 2, **caractérisé en ce que** la comparaison comprend les étapes de sélection de la valeur maximum ($T_{u\_max}$, $T_{v\_max}$, $T_{w\_max}$) des températures de chaque phase de sortie dans chaque module d'onduleur en parallèle, et de comparaison de cette valeur avec la température moyenne ($T_{u\_ave}$, $T_{v\_ave}$, $T_{w\_ave}$) de la phase de sortie correspondante.

4. Procédé selon la revendication 1, 2, ou 3, **caractérisé en ce que** le procédé comprend également une étape d'arrêt, en réponse à un signal d'alarme, d'au moins un module d'onduleur (A, B, C) ayant un écart de température au niveau de la phase de sortie.

5. Agencement en relation avec des modules d'onduleur connectés en parallèle, dans lequel deux ou plusieurs modules d'onduleur (A, B, C) sont connectés en parallèle pour alimenter la même charge, chaque module d'onduleur comprenant deux ou plusieurs phases de sortie (u, v, w) pour fournir la puissance électrique à une charge biphasée ou d'un nombre de phases plus élevé, l'agencement comprenant :

des moyens de détermination de température pour déterminer la température de chaque phase de sortie ($T_{Au}$, $T_{Av}$, $T_{Aw}$, $T_{Bu}$, $T_{Bv}$, $T_{Bw}$, $T_{Cu}$, $T_{Cv}$, $T_{Cw}$) de chaque module d'onduleur, **caractérisé en ce que** l'agencement comprend en outre :

des moyens de comparaison (CM) pour comparer la température de chaque phase de sortie de chaque module d'onduleur avec les températures des phases de sortie correspondantes des autres modules connectés en parallèle, et

des moyens (AM) pour générer un signal d'alarme (as) si la température de phase de sortie de l'un des modules d'onduleur diffère des températures de la phase de sortie correspondante des autres modules d'onduleur d'une valeur supérieure à celle autorisée par une limite prédéterminée.

6. Agencement selon la revendication 5, **caractérisé en ce que** l'agencement comprend en outre :

des moyens (CM) pour calculer une moyenne des températures des modules d'onduleur en parallèle mutuellement correspondants, les moyens de comparaison étant configurés pour comparer la température de chaque phase de sortie de chaque module d'onduleur en parallèle avec la moyenne de température d'une phase de sortie correspondante.

EP 1 537 647 B1

**EP 1 537 647 B1**

**Patent documents cited in the description**

- US 5493154 A
- EP 0444826 A2